# EUROPEAN PATENT APPLICATION

(11) **EP 1 594 322 A2**
(43) Date of publication of application: **09.11.2005**
(21) Application number: 05250821.5
(22) Date of filing: 11.02.2005
(51) Int. Cl.: H04N 13/00

(54) **Position determination**

(30) Priority: 11.02.2004 GB 0403051
(71) Applicant: BRITISH BROADCASTING CORPORATION, London W1A 1AA (GB)
(72) Inventor: Thomas, Graham Alexander, Uckfield East Sussex TN22 3HA (GB); Chandaria, Jigna, South Croydon Surrey (GB); Grau, Oliver, Leatherhead Surrey KT22 7HD (GB); Fraser, Hannah Margaret, Ticehurst East Sussex TN5 7AJ (GB); Brightwell, Peter John, Raynes Park London SW20 8EB (GB)
(74) Representative: Kazi, Ilya

(57) **Abstract**

A method for determining the position and orientation of a camera which does not rely on the use of special markers.

A set of reference images are stored, together with camera pose and feature information for each image. A first estimate of camera position is determined by comparing the current camera image with the set of reference images. A refined estimate can be obtained using features from the current image matched in a subset of similar reference images, and in particular, the 3D positions of those features. A consistent 3D model of all stored feature information need not be provided.

## Description

The present invention relates to position determination, particularly but not exclusively for determination of the position of a camera. In preferred aspects, position and orientation, herein referred to as "pose" are determined.

In applications such as TV production it is often necessary to render virtual objects so that they appear to be a part of a real scene. When the camera capturing the real scene is moving, it is necessary to estimate for each captured frame its pose (pan, tilt, roll, and x, y, z position), as well as its focal length, so that the virtual objects in the scene can be rendered to match. There are normally six degrees of freedom (although camera constraints, e.g. fixed cameras or cameras mounted on a track may have fewer), which are conveniently those mentioned (polar for orientation, Cartesian for position), but other co-ordinate systems (e.g. polar for position) may be used. The term "pose" is not intended to be limited to any particular co-ordinate system.

For applications in post-production, where the camera movement does not have to be computed in real-time, there are known methods which work by tracking natural features in the scene, such as corners and edges. One example of such a method is given in "Fitzgibbon, A. W. and Zisserman, A. *Automatic Camera Recovery for Closed or Open Image Sequences.* Proceedings of the European Conference on Computer Vision (1998), pp. 311-326". However, for real-time applications, it is generally necessary to have special markers whose position is known, such as in the system described in our patent EP-B-1,015,909, or to use mechanical mountings incorporating motion sensing devices.

Although there have been proposed some methods that do not rely on the use of special markers, none have yet shown themselves to be sufficiently robust or accurate for practical use. One example of such a method is given in "Vacchetti, L., Lepetit, V., Fua, P. *Fusing Online and Offline Information for Stable 3D tracking in Real-Time,* Proc. CVPR, Vol. 2 pp. 241-8, 2003", which requires a 3D model of the scene, or an object in it, to be generated in advance, and images of the scene or object to be captured from known positions. Other known methods build up a model of the scene during the tracking process itself. However, this approach tends to lead to a drift in the measured position of the camera, which is unacceptable in many applications.

In general, a practical real-time tracking algorithm normally needs to incorporate a method to estimate the initial pose of the camera. Most of the prior art tracking systems which do not employ fixed markers assume that this estimate is provide manually, although some workers have attempted initialising the angles of a camera from a reference image database, given the 3D position of the camera. An example of such initialisation is given in "Stricker, Didier, *Tracking with Reference Images: A Real-Time and Markerless Tracking Solution for Out-Door Augmented Reality Applications* In: International Symposium on Virtual Reality, Archaeology and Cultural Heritage (VAST), Glyfada, Greece, 2001, pp. 91-96"

One particular application of at least some aspects of the invention is the derivation of camera position in a scene to enable a virtual object to be overlaid on the camera image or the camera image processed to produce broadcast quality output in real time. It is important to appreciate that techniques developed for other purposes may be fundamentally unsuited to this task. In particular, certain types of error in position may be highly and unacceptably noticeable, as they can lead to visually highly perceptible effects. For example, a position determination method which provides a position with a relatively small but randomly fluctuating error may be perfectly usable for most purposes but may give rise to unacceptable jitter if used as the basis for a virtual image overlay.

Another important consideration is that at least some preferred applications of the present invention deal with deriving camera pose and often also camera lens parameters, particularly zoom, optionally also a measure of focus setting. Methods which are useful for determining a few degrees of freedom cannot in general be routinely adapted to determine more degrees of freedom as such methods normally rely at least implicitly on certain assumptions about the degrees of freedom which are not determined. A further consideration is the need to provide real-time motion information. Intensive processing techniques which may work well for deriving a static position may be inherently unsuited to practical use in real time and it is not normally realistic simply to apply brute force processing power to an inherently "static" technique. Thus, whilst extensive reference is made to certain prior art processing techniques as useful background to the invention, these references being made with the benefit of knowledge of the invention, this should not be taken to imply that the techniques were considered suitable for the application to which they or derivatives thereof have been put as components of embodiments of the present invention.

It is an object of at least preferred embodiments of this invention to provide a means of measuring the motion of a camera in real-time without the need for incorporating special markers in the scene, and without having to create an explicit 3D model of the scene. Another important object of at least preferred embodiments of the present invention is to provide a method to initialise rapidly such a tracking system.

Aspects of the invention are set out in the independent claims and preferred features are set out in the dependent claims. Further aspects and preferred features are set out below in the detailed description and any features disclosed herein may be provided independently unless otherwise stated. In the following, for conciseness, inventive features are described in the context of methods of determining position and processing data. However, as will be appreciated, the invention may be implemented using a computer program and/or appropriate processing apparatus and the invention extends to apparatus and computer programs or computer program products (such as computer readable means) for performing all method aspects.

An embodiment will now be described, by way of example, with reference to the accompanying drawings in which:-
Figure 1 illustrates a process for capturing and processing reference images.
Figure 2 is block diagram showing key components of an implementation of the proposed marker-free camera tracking system using reference images and associated depth maps or 3D feature information.

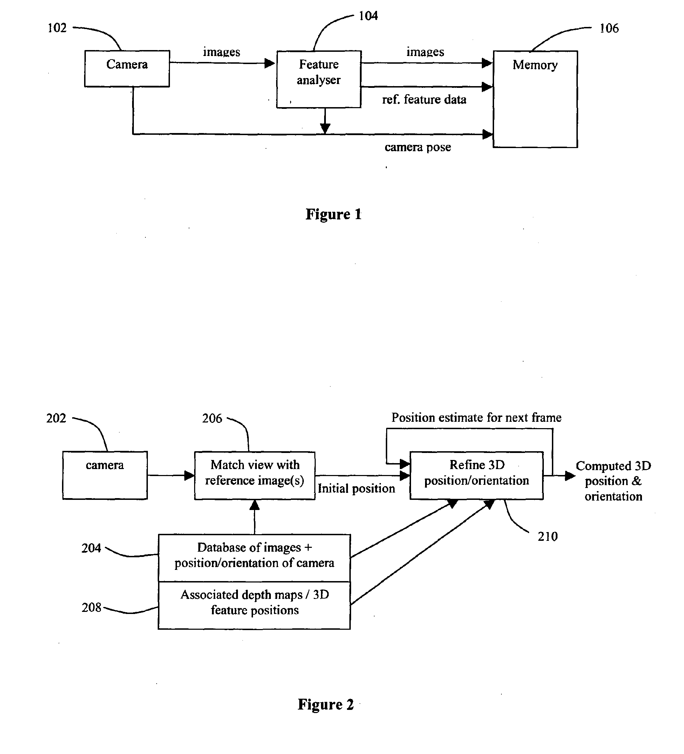

Creating a 3D model of a scene is a conventional method of estimating the required information. Theoretically it is logical and easy to understand. In practice, however, we have found that the limitations of accuracy with which the model can be created and used in reality, as well as the manual and computational effort, make this problematic for the purpose of virtual production. Rather than create a 3D model of the scene, we propose that a series of reference images of the scene are captured and stored (106 of fig. '1) before the tracking system is used, covering a range of views that are representative of those that the camera will be expected to see during use. These images could either be captured with a camera (102 of fig. 1) similar or identical to the camera that is to be tracked, or could be captured with a high-resolution stills camera. Such a camera fitted with a wide-angle lens provides a convenient way of rapidly acquiring a set of images that contain a high level of detail. The total number of images required will depend on the range of movement that the camera to be tracked can undergo, and may vary from less than 10 for a panning camera in a fixed position, to many hundreds for a camera that can move freely in a large volume. It is important to note that a 3D model could be created from these images. However, in practical applications, inconsistencies between information from each image give rise to problems and the practical effects are much more noticeable than the theory might suggest.

During an off-line pre-processing phase, information is derived and stored (106 of fig. 1) for each image that specifies the camera pose, together with the internal camera parameters (such as focal length, pixel dimensions and lens distortion). The positions in 3D space of selected features or regions in each reference image are also derived and stored. The selected features should be those that are easy to match and identify uniquely and are thus useful for the subsequent tracking process, and preferably include corners or edges, or patches of rich texture.

A measure of at least some parameters of camera pose associated with at least the reference images can be obtained from further source of pose information, optionally a further position determination system or camera sensor.

Any suitable off-line method (104 of fig. 1) may be used for deriving the positions in 3D space of features in a scene from multiple images, and for deriving the positions of the cameras that captured the images. One example is described in "M. Pollefeys, M. Vergauwen, K. Cornelis, J. Tops, F. Verbiest, L. Van Gool. *Structure and motion from image sequences* Proc. Conference on Optical 3-D Measurement Techniques V, Grün, Kahmen (Eds.), Vienna, October, 2001, pp. 251-258". Manual methods such as the use of surveying tools such as theodolites may also be used. Where the scene contains a known structure, such as the lines of a tennis court, its appearance and dimensions can be used to help the process. Other position determination methods may be used to assist, for example our marker tracking method of GB-A-2325807 using a modified reference camera. The precise method by which the data is gathered is not critical and it is important to note that this process is not time-critical, so prior art methods which are computationally intensive may be used in this step. ,

At least some measures of three-dimensional position of reference features are preferably calculated from comparison of a number of reference images. Calculated positions or storing positions for reference features may be modified based on user input.

It is highly convenient for the 3D feature locations in each reference image to be represented as a depth image from the point of view of the camera capturing the corresponding image, since by knowing the distance of a point or a region in the scene from the camera, and the pose and internal parameters of the camera, the 3D position of the point or region can be determined. In particular, this provides an efficient means of storing the 3D shape of patches of texture.

By keeping the views separate, rather than combining them into one large model, it is possible to maintain view-dependent features such as specular reflections. Views having the same camera pose, but with different focal lengths, may also be stored, so that detail may be captured at several different resolutions. This is particularly useful if the camera being used for tracking has a zoom lens, as some features that are useful to track when the camera is zoomed in will not be clearly visible when the lens is set to a wide-angle view.

It is important to note here that the stored information will not necessarily provide a self-consistent 3D model and it is not attempted to refine the data to provide one.

Furthermore, by deliberately *not* integrating all 3D points into a common model, the overall effect, using the inventive process, of errors or uncertainty in the 3D position of points or features may be *reduced.* For example, an error in assigning the correct depth to a low-texture area in one reference image is unlikely to have a major effect on camera pose calculations for positions around those of the reference image, as the erroneous value is still likely to give a good match to the observed scene. For positions further away, different reference images will be used so the error will have no effect. However, such an error could result in errors in a complete 3D model of the scene generated from all views, and although the averaging to produce a consistent model may reduce the individual errors, the residual errors would in turn would have a significant effect on camera pose measurements when attempting to measure the camera pose from the model at positions significantly displaced from that of the reference image that gave rise to the errors.

Those areas of each reference image which are unsuitable for use as features to track can be flagged, manually or automatically, or by a combination. Such areas might include those that were devoid of texture or other features, or those having features very similar to those appearing elsewhere in the image (which might give rise to false matches). Other features that are unsuitable for use for tracking include those areas that are likely to move in the scene (such as a door which may open), or those likely to be obscured (such as seats in a football stadium); such features may have to be manually identified during the image capture phase. It may also be useful to distinguish between features that are known to be rigid (such as a wall) and those that may potentially move over time (such as scenery in a studio), as this can help with re-calibration as explained later. The flagging may have a dynamic or conditional component, indicating that some areas may be reliable at some point or under certain lighting or other conditions but not others (e.g. if a part of a set is expected to move or is particularly prone to reflection). The classification information could be stored as a separate image component, allowing each pixel to be labelled individually. It may be convenient to flag some categories of image area, such as those which are totally unsuited for tracking, by using particular 'reserved values' in the image or depth map itself.

Each reference image may therefore comprise a plurality of pixels and include a measure of depth and a measure of suitability as a reference feature for each pixel. A variable measure of the suitability of a portion of each reference image to provide a reference feature can be stored. Designating or modifying designation of reference features, and/or designating non-reference features, can be based on user input and/or comparison of reference images.

### Initialisation

In order to initialise the tracking system when it is first switched on, or when it loses track of its position, a first image is captured by the camera (202 of fig. 2). The set of reference images (204 of fig. 2) are then compared (206 of fig. 2) with the captured image in order to determine which reference image gives the closest match. An estimate of the initial pose and internal parameters of the camera is then taken to be the set of stored camera parameters associated with the matching image. By matching with references images in their entirety, the matching process is more robust and faster than would be possible than by matching individually stored features. Information relating to the depth of features in each reference image may be ignored during this phase, as the aim is to get only a rough estimate of the camera position.

There are many matching methods known in the literature that could be used, such as cross-correlation, phase correlation, matching of features such as texture, shape, colour, edges or corners. For example, a discussion of colour descriptors can be found in "B. S. Manjunath, Jens-Rainer Ohm, Vinod V. Vasudevan, and Akio Yamada. *Color and Texture Descriptors.* IEEE Transactions On Circuits And Systems for Video Technology, Vol. 11, No. 6, June 200 1 ". A matching method based on phase correlation is described in by Stricker reference quoted above.

In order to search efficiently a large set of reference images, well-known methods such as multi-resolution approaches could be used. For example, a first set of correlations can be carried out using lower resolution versions of the captured and reference images in order to quickly eliminate a large number of poor matches. A mixture of techniques, including for example colour descriptors, could be used in this initial stage. Thus the current image can be compared to all of the reference images in at least an initialisation or validation step or in an initial comparison step. The remaining reference images can then be correlated at a higher resolution, and the process may be repeated several times until full-resolution images are used. Other fast matching methods could be used, such as using two one-dimensional correlations instead of a two-dimensional correlation. In this approach, the images to be correlated are each summed along their rows, to produce a single column of pixels consisting of the sum (or average) of the rows. A similar process is applied to columns of pixels. The averaged row of the captured image is then matched against the averaged rows of the reference images, and similarly for the columns. This approach can be combined with other approaches, such as multi-resolution.

The comparison may include direct comparing of images, and a plurality of comparison stages of progressively increasing accuracy and/or computational cost can be performed.

The matching process should be chosen to be relatively immune to parts of the scene not being visible in any reference image, or to the presence of objects or people in the current image that are not present in any reference image. This kind of immunity can be improved using well-known techniques such as dividing the image into quadrants or other regions, performing the correlation or other matching process separately for each region, and ignoring regions that give a poor match. It may also be advantageous to ignore areas of each reference image that were identified as being unsuitable for tracking.

In addition to identifying the image that matches best, the comparison process may also provide an estimate of the offset between this image and the first captured image. This offset may include, for example, the relative horizontal and vertical shifts between the captured and matching reference image that give the best correlation, the relative rotation of the images, or the relative scale. The camera parameters corresponding to the reference image may then be modified to take account of this offset before using them as an estimate for the current camera. For example, a horizontal shift between the two images could be interpreted as a difference in the camera pan angles, and the estimated pan angle of the first captured image could be set equal to the pan angle of the matching reference image plus this pan offset.

If several reference images having similar camera poses all show a reasonable degree of correlation, then an estimate of the camera pose may be formed by combining the estimates obtained from these reference images. The relative weight assigned to each estimated pose could be varied depending on the degree of correlation with each image, to provide a soft switch between reference images.

In order to facilitate the rapid implementation of this matching or correlation process, it may be convenient to pre-compute and store additional representations of the reference images. Such pre-computed representations could include colour descriptors, horizontally and vertically-averaged one-dimensional representations, phase angles suitable for use with phase correlation, or images with edges or other features accentuated, or other features (such as low-frequencies) attenuated. Copies of each image (or derived representations) at a range of resolutions could also be stored.

If there exists some prior knowledge of the likely position or orientation of the camera, this may be used to optimise the search through the reference image set, for example by starting the search with images corresponding to the expected pose, or by giving more weight to these images when assessing the correlation. Prior knowledge could include the last known camera position, or position estimates from other tracking systems based on technology such as GPS or inertial navigation.

Other efficient search techniques, such as a decision tree, or tools from the well-known A* toolbox, can also be used to improve the efficiency of the search. Approaches that could be used include using costs determined on lower-resolution images to determine which images are searched at higher resolutions, or by testing a sub-set of pixels or descriptor values in the first stage of the search. By starting the search with images corresponding to the likely camera position, and rejecting other images during the search process as soon as their matching cost exceeds the best cost seen so far, a significant increase in speed can be obtained.

### Frame-to-frame tracking

Once the initial camera pose has been estimated, the additional information of the depth or 3D position of the features (208 of fig. 2) within the nearest or best-matching reference image(s) can be used to calculate the current camera pose to a higher accuracy (210 of fig. 2). Known feature-matching techniques such as normalised cross-correlation of image patches, comer-finding or line matching may be used to find the position in the current camera image of features corresponding to those in the nearest reference images. Techniques to improve correlation-based matching may also be applied. One example is the transformation of local image areas in the reference image in accordance with local surface normals and the current direction of view, as described by Vacchetti et al. Alternatively, each local area of each reference image could be 'warped' in accordance with the pixel-wise depth map in order to approximate its appearance from the estimated camera viewpoint. Such a warping can be achieved by constructing planar mesh corresponding to the depth map, projecting the image onto this mesh, and rendering a view of the mesh to correspond to the estimated camera pose.

Once a number of features in the current image have been matched with corresponding features in one or more reference images, the current camera pose can be estimated using knowledge of the 3D positions of the features, for example by iteratively adjusting the estimated camera pose in order to minimise a measure of the error between where the features appear in the current image and where they would be expected to appear, based on the 3D feature positions in the stored images.

Due to errors and approximations in the generation of the reference image set and associated data, the 3D positions of features which appear in two or more reference images may not agree exactly. However, a satisfactory estimate of the current camera pose will generally be obtained by retaining information from each appearance of a feature in a reference image. Indeed, the result will be similar to that which would have been obtained if the position of the feature in each image was adjusted to make these particular images self-consistent. It may be advantageous to change the relative weight applied to features in each image based on an estimate of how close the current camera pose is to that of each reference image. This helps to ensure a smooth transition between reference images, and ensures that the pose computed when the camera position matches that of a reference image will be equal to that which was pre-computed for this reference image.

As features move into and out of the field of view of the camera being tracked, there is a likelihood of there being a small jump in the computed camera pose, due to errors in the assumed 3D feature positions. This can be significantly reduced by applying the technique described in our European patent application 02004163.8.

Some features may give false matches, for example where a new object or person has come into the scene and is not present in the corresponding reference image. Well-known techniques, such as RANSAC, may be used to reduce or eliminate such problems. An example of the application of the RANSAC method to camera tracking may be found in "Simon, G. , Fitzgibbon, A. and Zisserman, A. *Markerless Tracking using Planar Structures in the Scene.* Proc. International Symposium on Augmented Reality (2000), pp. 120-128".

Assuming that the current camera pose has been successfully computed, this pose can be used to predict the pose in the following frame, without the need to search through the stored images. However, as the camera moves, the references image(s) used for matching will need to change, as other images give better matches to the camera pose. The most appropriate image(s) to use can be identified by comparing the current estimated camera pose to the poses of the views in the reference image set, for example by identifying images having closely-matching poses and focal lengths. In general, several reference images should be used when computing the camera pose for each frame.

### Re-calibration of the reference images

Although one useful mode of operation of this system is with a fixed reference image database, the system can also be operated in a mode whereby the image database is refined, corrected or added to whilst the system is tracking the camera position. For example, when a feature is seen that is visible in two or more reference images, the 3D position of the feature in each reference view could be adjusted slightly to improve the self-consistency of the views.

Also, additional reference images could be captured, with the 3D positions of features being automatically computed. This may be particularly useful in areas with a lower density of existing reference images. Using such an approach, the system could 'bootstrap' itself by filling in the gaps between existing reference images. In some cases, images may be synthesised or interpolated initially to populate sparse reference data and then discarded as real data becomes available.

Before performing such a re-calibration, it may be useful to label some features in the reference images as being permanently fixed, and others as being adjustable. This would be particularly useful in situations where it is known that some features are liable to move (such as scenery in a studio) whilst others will remain rigidly fixed (such as marks on a wall). This labelling process can be conveniently carried out during the initial capture of the reference images.

### Detection and recovery from failure

There will be occasions when a new camera pose cannot be successfully computed. This might be indicated, for example, by high residual errors in the optimisation process that attempts to match observed features to those in the reference images, highly inconsistent results from each reference image being used, or an inability to find sufficient matching features in a reference image. In this situation, the initialisation process should be started again.

If the initialisation process can be implemented sufficiently quickly, then it may be advantageous to perform this initialisation every frame, regardless of whether the tracking process has succeeded. This avoids the need to explicitly determine whether the tracking process was successful. However, in order to avoid the system suddenly jumping to a different position due to a false match, a strong bias towards the last assumed position should be included in the initialisation phase. If the initialisation process is too slow to run at the full video frame rate, then it could be run in parallel to the main tracking process at a lower frame rate, with each result being compared to that from the frame-to-frame tracking process for the same input frame. If the results disagreed significantly, for example if the 'full search' initialisation process gave a lower overall match error than the frame-to-frame process, then the result from the initialisation process could be used instead, and the frame-to-frame tracking restarted from the corrected position.

Thus to summarise, for initial pose estimation, the basic problem we have formulated is to obtain initial estimate position, orientation (and optionally zoom) of camera given a database of images with known camera parameters. A solution is to extract useful image features to allow a fast search through database (colour, texture, ...) and/or using 2D correlation (Fourier-Mellin) on selected images for identifying offset. Then, we combine estimates from several neighbouring images to improve accuracy / reduce noise. It is possible to use this directly for applications with constrained camera movement (pan/tilt/zoom only).

For Predictive tracking, a basic problem is to determine position and orientation (and optionally zoom) accurately (ideally 0.01 degrees & 1mm) from image database which includes 3D information (e.g. as depth maps), given estimate of initial parameters. One basic approach is texture-based matching, using gradient-based disparity & local depth estimate to refine estimate of 3D position. This can make use of known feature extraction and offline scene modelling techniques.

The operation of the system can be explained with reference to the following flowchart:-
1. Grab a camera image
2. Search image database to locate one or more nearest matching image(s) and optionally their relative offsets (one or more of horizontal shift, vertical shift, rotation, scale change)
3. Compute an estimate of the current camera pose from the camera pose(s) from the matching reference image(s) and their relative offsets
4. Identify a selection of features in the current image that match those in one or more reference image(s) appropriate for the current estimated camera pose
5. Refine the estimate of the current camera pose by considering the 3D positions of the matched features
6. If the refined pose is not sufficiently consistent with the reference image(s), or insufficient matched features could be found, go to 2
7. Output the refined camera pose
8. Set the estimated camera pose for the next frame equal to the pose just computed
9. Grab a new image from the camera
10. Go to 4

The basic tracking system was described above in the context of the images from a single camera being used to track its own movement. However, it can be used in a system with additional cameras or other sensors to provide improved performance. The method may further comprise processing the image or images, preferably by applying an effect, preferably based on adding or interacting with a virtual object, the processing preferably being based on the measure of camera pose. The estimated pose of an object coupled to the camera can also be determined.

For example, two or more cameras with different fields-of-view may be mounted rigidly together with a known relative pose, and their images processed using the above tracking algorithm. Both the initialisation and frame-to-frame tracking may be carried out either independently for each camera, with the computed poses being averaged after conversion into a common reference frame, or the pose of the camera system as a whole may be estimated in one process by optimising the matching process across all images simultaneously. Ideally, three cameras would be used, mounted at right angles to each other. One of these cameras might be a camera that is being used to capture images onto which virtual 3D elements are to be overlaid, or alternatively the cameras used for pose estimation may be completely separate (for example, being mounted on the side or rear of the main camera, looking backwards, to the right, and up at the ceiling).

For initial capture of reference images, there may be merit in using a 'reasonably' wide angle lens, say 35 mm rather than fish eye. The sensitivity of ccd detectors is such that one could stop down [in most situations] and obtain a better depth of field than might be possible with a video camera - assuming of course that this might be helpful in the reference images. If one considers a Golf course situation, then most of the reference points will be effectively at infinity anyway [trees, camera platforms] save for images taken on greens. If one uses stills, there may be advantage in having two cameras linked together for stereo pictures so as to facilitate depth mapping.

The depth information for the reference images may be obtained by processing multiple images, for example using stereogrammetric techniques on images from a single camera or from two or more linked cameras and/or may be supplied by a user or by another depth sensitive technique, e.g. using structured light or time of flight.

Where the image from the main camera is not being used for tracking, it will be necessary to use additional sensors to determine the focal length, for example by using rotary encoders to measure the settings of the zoom and focus rings. Even where the image from the main camera is used for tracking, there will be an advantage in using such sensors to determine the focal length, as this reduces the number of unknowns that need to be determined.

Other additional sensors may be used both to help in the initialisation phase, and to help in the frame-to-frame tracking, particularly to predict the current position if the feature-based tracker fails. For example, for indoor use, data from a ceiling-target-based tracking system could be used; such a combined system should be able to operate with a significantly reduced number of targets compared to using a target-based system alone. For outdoor use, position data from a GPS system could be used to give an approximate camera position in applications such as sports outside broadcasts. The addition of an inertial sensor can also help, particularly to recognise rapid rotations.

In addition to applications requiring tracking of a camera in an image sequence, the initialisation method may be used on its own as a convenient way of estimating the pose of a camera, in particular where the position of the camera is known but its orientation or focal length may have changed. By using one or more reference images captured by the camera when in known poses, the pose of the camera can later be determined by measuring the relative translation, scale change or rotation between the current image and the closest reference image(s). This finds particular application when re-calibrating a notionally fixed camera, when its orientation or zoom have been accidentally changed.

In the case of a camera whose position remains almost fixed, but is free to rotate (such as a camera on a fixed pan-and-tilt head), the initialisation stage can be used on its own to provide an estimate of the camera pose. Since no additional information is gained by the use of depth information, the frame-to-frame tracking stage can either be omitted completely, or significantly simplified.

A gradient based approach may be used to enhance results. One application of a gradient approach is to look at the local spatial luminance gradient in the current and/or reference image at pixels that roughly correspond, based on the estimated relative camera pose, and the difference in brightness levels between these pixels. By using this information in conjunction with the depth (from the associated depth map), an estimate can be formed of how to update the camera pose in order to minimise the luminance difference. This differs from conventional gradient-based motion estimation primarily in that instead of solving for the 2D shift of one image relative to the other needed to minimise the luminance mismatch, we solve for the 3D camera position. Given the depth at each pixel, the movement of the camera in 3D can be related to the corresponding 2D shift. The conventional alternative would be to first work out the relative shifts in 2D for various points in the image, then solve for the 3D camera position that best fits these shifts - but if a 2D shift for one image portion is inaccuarate (e.g. because the image contains little detail, or the only detail there is lies along an edge so that motion parallel to the edge cannot realiably be determined), a poor result may be obtained. However, our approach works directly with the gradients so areas with stronger gradients contribute more to the result, so that plain areas will not contribute incorrect information (they simply have no influence), and an edge will only constrain the camera movement in ways that affect image motion at right angles to the edge.

A potential down-side is that gradient methods are very sensitive to illumination changes, but this can be mitigated, according to a further independent aspect, by various techniques such as using the second-order spatial derivative of image brightness, which should be (roughly) invariant to image brightness. Second order derivatives are not easily directly usable (as one cannot readily simply approximate the brightness of the image without using the first derivative), but we have proposed developments such as forming an "image" from the second-order derivative, normalising it as desired, for example by clipping, thresholding, optionally rectifying the result to make everything 0 or +1, then optionally low-pass filtering this "edge signal" image so that a gradient-based system can operate on a nice soft brightness-invariant image.

The use of gradient information in conjunction with 3D reference information stored as a depth map provides a further independent aspect.

All features disclosed herein may be independently provided. Further aspects include.
- Initialisation of a 3D tracking system by estimation of the 3D position and orientation of a camera by comparing a captured image to images in a database captured at known positions and orientations - specifically the idea of searching in order to estimate both the camera position and orientation (the Stricker reference uses an image database for pan/tilt and zoom (or forward/backward position) only, and not as an initialisation stage for a subsequent six-degree-of-freedom tracking process). ,
- Use of an image search strategy, preferably a multi-stage search, preferably based on preceding search results (e.g. colour descriptors, use of A* search) to provide at least 3D position determination, preferably pose determination, preferably in real time, preferably at least 20 frames per second, by searching at least 50 images, more preferably at least 100 images, preferably at least 1000 images, preferably including several, preferably at least 3, preferably at least 10, typically at least about 50 images (giving an all-round view) from each of a plurality, preferably at least 10, preferably at least 100 different 3D locations.
- Incorporation of 3D information in the image database in a form that is local to each image (rather than referring to a global scene model), preferably storing the 3D information about the scene in the form of a depth map associated with each image.
- Use of the depth map for each image to 'warp' regions of the image containing features of interest in order to improve correlation-based matching.
- Indicating which 3D features in the image database should be allowed to be moved in a recalibration process.
- Failure detection by running the initialisation process 'in the background', to provide a check every few seconds that the frame-to-frame tracking has not gone astray.
- A method of determining a real-time estimate of the position of a camera comprising tracking the motion of the camera to obtain a dynamic position estimate, wherein the dynamic position estimate is validated based on determining the absolute position of the camera periodically based on the camera image information.
- A method of matching a camera image to a reference image comprising adjusting the reference image based on depth information and matching the adjusted image to the camera image.
- A method of determining a measure of camera pose comprising searching a plurality of reference images each associated with known camera poses to determine an initial pose based on matching a camera image to the reference images.
- A machine readable data store comprising a plurality of two-dimensional camera images associated with depth information and a measure of reference feature utility for each pixel and a measure of camera pose for each image.

## Claims

1. A method of determining an estimate of the pose of a camera comprising:
storing a plurality of reference images corresponding to a respective plurality of camera poses, the images including a plurality of reference features;
storing a measure of three dimensional position information for the plurality of reference features;
obtaining a current camera image from the camera;
selecting one of the plurality of reference images as a current reference image based on the current camera image;
providing an initial estimate of the pose of the camera based on the camera pose corresponding to the current reference image.

2. A method according to Claim 1, wherein the measure of three-dimensional position information is stored as a depth map for each reference image.

3. A method according to any preceding claim wherein the estimate of the pose has six degrees of freedom.

4. A method according to Claim 3, wherein the estimate of pose comprises a three-dimensional estimate of position and an estimate of orientation including pan and tilt.

5. A method according to any preceding claim wherein the current reference image is selected by comparing the current image to at least some of the plurality of reference images.

6. A method according to Claim 5 wherein the current image is compared to only a subset of the plurality of reference images in at least one comparison step.

7. A method according to Claim 6 wherein the subset is selected based on at least one of:-
a previous estimate of pose or position;
a further input of a measure of pose or position or motion, optionally from a position or motion sensor (e.g. GPS or inertial);
the results of an initial comparison step.

8. A method according to any of Claims 5 to 7 wherein the comparison includes comparing derivative measures of image content (for example colour measures, or lower resolution images).

9. A method according to any preceding claim further comprising refining the initial estimate of pose based on the position of reference features.

10. A method according to Claim 9 wherein a confidence measure is stored for each of the features.

11. A method according to any preceding claim wherein first portions of the reference images are identified as being suited to providing reference features.

12. A method according to any preceding claim wherein second portions of the reference images are identified as being unsuited to providing reference features.

13. A method according to any preceding claim wherein each reference images comprises a plurality of pixels in a plurality of regions and includes a measure of depth and a measure of suitability as a reference feature for each region.

14. A method according to any preceding claim including processing a plurality of images obtained to provide said reference images and to store the measures of three-dimensional position prior to using the reference images to determine pose for a current image.

15. A method according to any preceding claim further comprising updating or adding to the store of reference images and/or the reference features based on the current image.

16. A method according to any preceding claim of providing a real-time output of current camera pose wherein a current position estimate is updated when a new camera image replaces the current camera image.

17. A method according to Claim 16 wherein a current position estimate is updated at least 20 times per second, preferably for every camera frame.

18. A method according to Claim 16 or 17 wherein an initial estimate of camera pose is obtained in an initialisation process and wherein movement is tracked from frame to frame, wherein movement tracking is performed using fewer comparison operations than the initialisation process.

19. A method according to Claim 18 wherein a validation process is performed in which more comparisons are performed than in the movement tracking process and wherein the results of the validation process are compared to the results of the tracking process.

20. A method according to any preceding claim wherein at least one reference feature includes an edge.

21. A method according to any preceding claim wherein a measure of gradient is associated with at least some reference features.

22. A method according to any preceding claim wherein a measure of at least one further camera parameter is obtained, preferably at least zoom, optionally a measure of focus.

23. A method according to any preceding claim wherein the reference images comprise a plurality of images at different resolutions.

24. A method according to any preceding claim wherein images are obtained from a plurality of cameras coupled together at known relative orientations, preferably fixed, optionally three cameras, preferably mutually orthogonal.

25. A method according to Claim 24 wherein one camera is designated as a studio image camera and the other camera(s) are provided to enhance pose estimation for the studio camera.

26. A method according to any preceding claim wherein the camera is a studio camera, the method further comprising processing the camera image to derive an output image, preferably a broadcast quality image.

27. A method of determining an estimate of the pose of a camera comprising
storing a plurality of reference images containing reference features and associated depth information, the images being associated with reference pose information;
obtaining a current camera image;
deriving an estimate of the pose of the camera by comparing the current camera image to the reference images, wherein the estimated pose is based on the reference pose information and reference features for a plurality of reference images and associated depth information without resolving the reference images into a consistent three-dimensional model.

28. A method of compiling a database of reference images for use in determining camera pose, the method comprising:
storing a plurality of images from mutually different poses;
storing camera pose information for each image;
identifying reference features within the images;
storing identifiers of the reference features and a measure of three dimensional position of the features, preferably as a depth map.

29. A database of images and associated positional information compiled by the method of Claim 28.

30. Apparatus or a computer program or a computer program product comprising means or instructions arranged to perform a method according to any preceding claim.

31. Use of a database containing plurality of reference images of a scene with associated depth information and camera pose information to determine a measure of camera pose from a trial image by matching the trial image in the database without constructing a three-dimensional model of the scene from the reference images.
